# EUROPEAN PATENT APPLICATION

(11) **EP 0 920 192 A2**
(43) Date of publication of application: **02.06.1999**
(21) Application number: 98309779.1
(22) Date of filing: 30.11.1998
(51) Int. Cl.: H04N 1/401

(54) **Method of shading correction for shuttle scanning devices**

(30) Priority: 29.11.1997 KR 9764363
(71) Applicant: SAMSUNG ELECTRONICS CO., LTD., Suwon-City, Kyungki-do (KR)
(72) Inventor: Lee, Hyuk-jae, Kihung-eup, Yongin-si, Kyungki-do (KR)
(74) Representative: Tunstall, Christopher Stephen

(57) **Abstract**

A method of calculating a precise scanning reference value for a shading correction. The method comprises the steps of recognising a shading correction mode; scanning a plural number of scanning values within a shading correction scanning reference area; and calculating the scanning reference value by using said plural number of scanning values.

## Description

### Background of the Invention

The present invention relates to a method for preventing noise and distortion occurring during shading correction of a shuttle scanner.

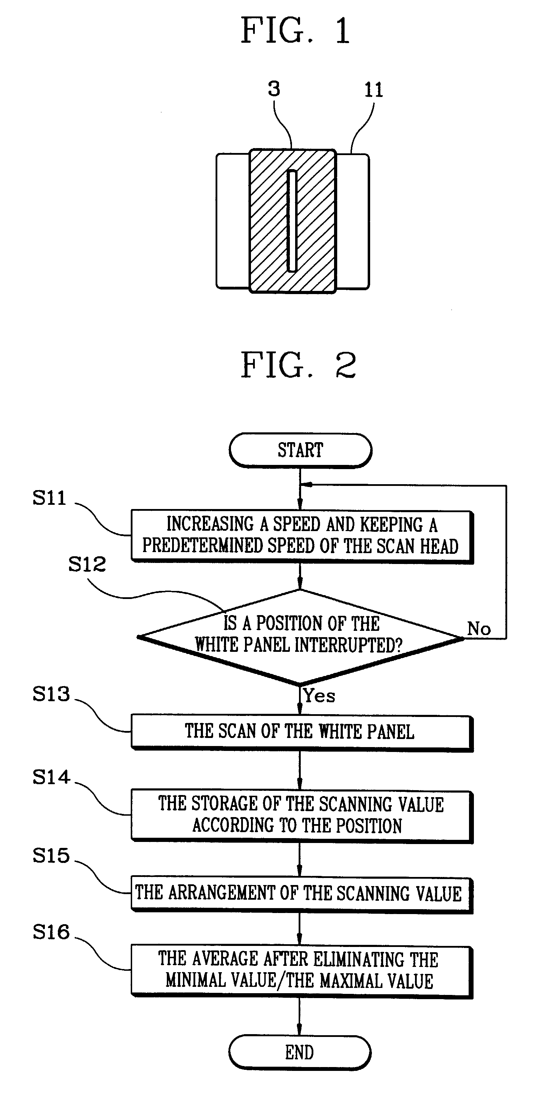

Fig. 1 shows the scanning part of a conventional shuttle scanning device. The scanning part is shown in a stopped state after a scanner 3 has moved to a reference panel position 11 of the document being scanned. A "reference panel" as used herein should be understood to include a panel of any background colour, upon which an image to be scanned is superimposed. Typically, the reference panel will be white or the palest colour included in the image. A conventional shading correction method involves illuminating panel 11 with the scanner in a stopped state, measuring the reflected light intensity and using that measured value as a shading factor at the time of actual scanning.

There is a known method of median filtering used in order to avoid a shading correction error which may occur through reading a polluted part of the reference panel 11. That method involves eliminating spot noises by excluding a maximum value and a minimum value of reflected light intensity.

Another known method involves using an average value as a shading factor value, taken after having read the reference panel several times, in a stopped state. This method is used to avoid a line movement after a shading correction due to uniformity of the shading factor by a white Gaussian random noise.

### Summary of the Invention

The present invention aims to provide a precise scanning reference value for a shading correction in a shuttle scanner device.

The present invention also aims to prevent errors occurring between a shading correction factor value and an actual scanning value.

Accordingly, the present invention provides a method of calculating a scanning reference value for shading correction comprising the steps of: scanning a reference panel; reading a plurality of scanning values for each of a plurality of pixels within the reference panel; and calculating a scanning reference value using said plurality of scanning values.

The method preferably further comprises the step of driving a scanner to a position of the reference panel.

The driving step and the scanning step themselves preferably comprise the steps of increasing a travelling speed of the scanner prior to the scanner's arrival at the reference panel; and keeping a predetermined scanning speed while scanning the reference panel.

The method preferably further comprises the step of dividing a scanning area under a scanner into a practical scanning area, containing an image to be scanned and a shading correction scanning area containing the reference panel.

The practical scanning area and the shading correction scanning area are preferably comprised within a document to be scanned.

The reference panel preferably represents a background colour, upon which the image to be scanned is superimposed.

The calculating step itself may comprise the steps of storing scanned values of pixels of the reference panel in a memory; and calculating the scanning reference value using at least a subset of the scanned values. The calculating step may further comprise the step of arranging the scanned values, between the steps of storing and calculating.

The calculating step may include eliminating a maximum scanned value, and a minimum scanned value, for each pixel; and calculating an average of the remaining scanned values.

The method may further include the step of recognising a shading correcting mode.

### Brief Description of the Drawings

The present invention, and certain aims and advantages thereof, will be more readily apparent by reference to the following detailed description of certain embodiments, given by way of examples only, in conjunction with the accompanying drawings in which:
FIG. 1 shows a conventional shading correction method being performed in a conventional shuttle scanning device;
FIG. 2 is a flow diagram illustrating a shading correction method in accordance with the present invention;
FIG. 3 shows the shading method of the present invention being performed; and
FIGS. 4A and 4B show shading distributions measured at a stop state of the scanner and at a moving state of the scanner.

The shuttle scanner operates in a reciprocating motion at right angles to a feeding direction of the document being scanned. Here, the scanner is not in an ideal state as inclination occurs. For this reason, a difference can occur between a scanning state at the time of reading the shading factor and a scanning state at the time of scanning an actual image area. As a result, the shading correction includes more errors than in case of not taking an average value, and gives an inaccurate value.

In conventional shading correction methods, the shading factor average value is found by reading the shading factor several times in a stop position of the scanner, over a reference panel. Accordingly, it has a disadvantage that the shading situation at the actual moving time of the scanner may be different from that at the stop position, so causing inaccuracies in scanning data.

### Detailed Description of the Invention

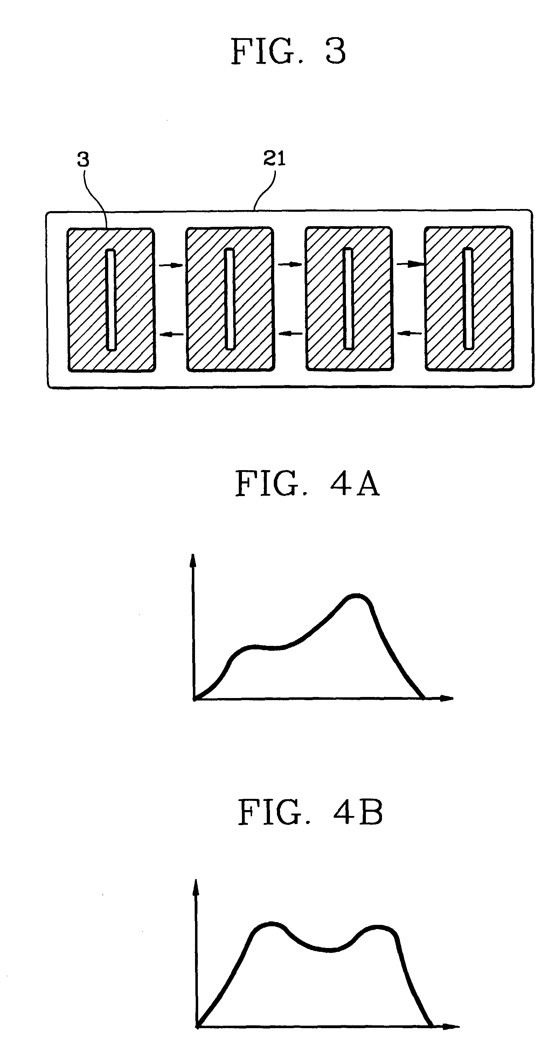

Conventional techniques make a scanner scan the reference panel in a stop state. As shown in FIG. 3, the present invention gets the scanner to scan the reference panel while driving with a predetermined speed at many places of the reference panel 21. The scanner 3 scans in moving in both the left-right and right-left directions with a predetermined speed. The reference panel needs to be a little longer than a conventional reference panel in order that the scanner can scan the reference panel 21 in operating with the predetermined speed.

FIG. 2 is a flow diagram illustrating a method of the present invention. First, the scanner is driven with an increasing speed until a predetermined speed is reached, (Step S11) and then travels to a position of a reference panel (Step S12). The scanner scans the reference panel with the predetermined speed (Step S13).

Values of light reflected from the reference panel are measured, and stored (Step S14).

For example, table 1 shows measured values of a reference panel, 4 pixels wide, scanned three times. The measured values are preferably stored in any convenient memory device.

**Table 1**

| | first scanning | second scanning | third scanning |
|---|---|---|---|
| pixel position 1 | 254 | 251 | 255 |
| pixel position 2 | 254 | 249 | 248 |
| pixel position 3 | 150 | 249 | 245 |
| pixel position 4 | 254 | 248 | 252 |

The scanning data stored for each pixel position are arranged in order of size as shown in table 2 (Step S15).

**Table 2**

| | the minimum | the median | the maximum |
|---|---|---|---|
| pixel position 1 | 251 | 254 | 255 |
| pixel position 2 | 248 | 249 | 254 |
| pixel position 3 | 150 | 245 | 249 |
| pixel position 4 | 248 | 252 | 254 |

The maximum and minimum values for each pixel position are then eliminated (table 3).

Once the maximum and minimum values for each pixel have been eliminated, an average value of the remaining values is calculated, and is used as the shading factor (Step S16).

**Table 3**

| | the average value |
|---|---|
| pixel position 1 | 254 |
| pixel position 2 | 249 |
| pixel position 3 | 245 |
| pixel position 4 | 252 |

FIGS. 4A and 4B are graphs illustrating shading value distribution according to an actual experimental result. The x-axis indicates a scanner position while the y-axis indicates a measured light quantity.

FIG. 4A shows a shading distribution measured in a stop state of the scanner according to the conventional technique. FIG. 4B shows a shading distribution measured with a moving scanner, according to the present invention. The shading distribution of FIG. 4B shows that the distortion of the shading factor is prevented because an accurate shading correction value can be obtained.

As explained above, the present invention can prevent a horizontal line, which may occur in an image due to distortion of the shading factor if the reference panel is scanned in the stop state. Also, the likelihood of distortion of the shading factor which may occur due to pollution of the reference panel can be reduced by the effect of the median filtering.

It will be apparent to those skilled in the art that various modifications can be made in the shading correction method for a shuttle scanning device of the present invention, without departing from the present invention.

## Claims

1. A method of calculating a scanning reference value for shading correction comprising the steps of:
- scanning (S13) a reference panel (21);
- reading a plurality of scanning values for each of a plurality of pixels within the reference panel; and
- calculating (S16) a scanning reference value using said plurality of scanning values.

2. A method according to claim 1 further comprising the step of driving a scanner (3) to a position of the reference panel.

3. A method according to claim 2, wherein said driving step and said scanning step themselves comprise the steps of:
- increasing a travelling speed of the scanner prior to the scanner's arrival at the reference panel; and
- keeping a predetermined scanning speed while scanning the reference panel (S11).

4. A method according to any preceding claim further comprising the step of:
- dividing a scanning area under a scanner into a practical scanning area, containing an image to be scanned and a shading correction scanning area containing the reference panel.

5. A method according to claim 4 wherein the practical scanning area and the shading correction scanning area are comprised within a document to be scanned.

6. A method according to claim 4 or claim 5 wherein the reference panel represents a background colour, upon which the image to be scanned is superimposed.

7. A method according to any preceding claim, wherein the calculating step itself comprises the steps of:
- storing scanned values of pixels of the reference panel in a memory; and
- calculating the scanning reference value using at least a subset of the scanned values.

8. A method according to claim 7, wherein said calculating step (S16) includes:
- eliminating a maximum scanned value, and a minimum scanned value, for each pixel; and
- calculating an average of the remaining scanned values.

9. A method according to any preceding claim, further comprising the step of
- recognising a shading correcting mode.

10. A method substantially described and/or as illustrated in FIGS. 2 - 4B of the accompanying drawings.
